# FASCICULE DE BREVET EUROPEEN

(11) **EP 1 777 063 B1**
(45) Date de publication et mention de la délivrance du brevet: **04.07.2012**
(21) Numéro de dépôt: 06122561.1
(22) Date de dépôt: 19.10.2006
(51) Int. Cl.: B29C 70/24, B29C 70/48, B29B 11/16, B29K 307/04, B29L 31/08

(54) **Procédé de fabrication d'une aube de turbomachine composite, et aube obtenue par ce procédé**
Herstellungsverfahren einer Turbinenschaufel aus Verbundwerkstoff und die so erhaltene Schaufel
Manufacturing process of a composite turbine blade and the blade obtained thereby

(30) Priorité: 21.10.2005 FR 0510752
(43) Date de publication de la demande: 25.04.2007
(73) Titulaire: SNECMA, 75015 Paris (FR)
(72) Inventeur: Coupe, Dominique, 33185 Le Haillan (FR); Dambrine, Bruno, 77820 Le Châtelet en Brie (FR); Lévèque, Stéphane, 91300 Massy (FR); Mahieu, Jean-Noël, 75013 Paris (FR)
(74) Mandataire: Cardy, Sophie Marie

(56) Documents cités:
- EP-A- 0 743 165
- EP-A- 0 792 738
- WO-A-98/50211
- WO-A-2005/011962
- FR-A- 2 496 716
- FR-A- 2 740 379
- FR-A- 2 861 143
- JP-A- 2000 110 046
- GIRARDY H ET AL: "UNE VOIE DANS L'INDUSTRIALISATION DES COMPOSITES HAUTES PERFORMANCES: DES RENFORTS PREFORMABLES, DEFORMABLES. INJECTABLES" COMPOSITES. PLASTIQUES RENFORCES FIBRES DE VERRE TEXTILE, CENTRE DOC. VERRE TEXTILE PLAS RE. PARIS, FR, vol. 29, no. 3, 1 mai 1989 (1989-05-01), pages 135-138, XP000086066 ISSN: 0754-0876
- ANONYME: INTERNET PUBLICATION, [Online] 22 août 2003 (2003-08-22), XP002413118 Extrait de l'Internet: URL:http://www.niar.wichita.edu/faa/FAALRM /Draft%20Fabric%20Specification%20Document /Fabric%20Prepreg%20Material%20Control%20D raft%20v5a%20for%20review.pdf> [extrait le 2007-01-04]
- CLIVE ANDREWS: "carbon yarn and woven carbon fabric reinforcement" INTERNET PUBLICATION, [Online] août 2001 (2001-08), XP002413119 Extrait de l'Internet: URL:https://www02.aermacchi.it/eDoc/SMS/47 .pdf> [extrait le 2007-01-04]
- SEBASTIAAN WIJSKAMP: "shape distorsion in composites forming" INTERNET PUBLICATION, [Online] mai 2005 (2005-05), XP002413120 Enschede, The Netherlands ISBN: 90-365-2175-0 Extrait de l'Internet: URL:http://doc.utwente.nl/fid/3074> [extrait le 2007-01-04]

## Description

L'invention concerne un procédé de fabrication d'une aube de turbomachine composite ainsi que l'aube obtenue par ce procédé.

Il s'agit d'une aube composite du type comprenant une préforme en fils ou fibres tissé(e)s en trois dimensions et un liant maintenant la disposition relative entre les fils de la préforme, ladite préforme étant formée de fils de chaîne et de fils de trame, la direction des fils de chaîne formant la direction longitudinale de la préforme.

En particulier, la présente invention se rapporte à une aube de soufflante pour une turbomachine, notamment un turbo-réacteur. Cependant, on envisage également dans le cadre de la présente invention de fabriquer une aube destinée à un compresseur basse pression où les températures atteintes en fonctionnement sont compatibles avec la résistance thermomécanique de ce type d'aube.

De manière habituelle, les aubes de soufflantes réalisées en matériau composite, en particulier en fibres de carbone, sont réalisées à partir d'un empilement de plis unidirectionnels préimprégnés que l'on place dans un moule en orientant différemment les plis successifs, avant compactage et polymérisation à l'autoclave. Cette technique très délicate requiert d'effectuer les opérations d'empilage de plis de manière manuelle, ce qui est long et coûteux.

Il a aussi été proposé de préparer des préformes tissées de fibres sèches qui sont ensuite assemblées par couture, avant une imprégnation par résine par injection dans un moule fermé. Une alternative a consisté à réaliser une seule préforme tissée qui est montée avec un ou plusieurs inserts pleins avant injection. Ces solutions (US 5 672 417 et US 5 013 216) présentent toutefois l'inconvénient de nécessiter l'assemblage de plusieurs pièces et de créer dans ces zones d'assemblage, des sites privilégiés de fragilité, par exemple de délaminage, ce qui est très néfaste en termes de résistance mécanique, notamment pour la tenue aux impacts.

Pour surmonter ces inconvénients, le document FR2861143 a proposé de réaliser une préforme en fils ou fibres tissé(e)s en trois dimensions permettant de former à elle seule, après découpe éventuelle et injection, la pièce finale formant toutes les parties de l'aube de turbomachine, sans recourir à l'utilisation d'inserts ou de tout autre élément rapporté.

Dans ce cas, cependant, quelle que soit l'origine de la préforme polymérisée (un stratifié pré-imprégné ou bien une préforme tissée en trois dimensions), après le démoulage de la pièce intermédiaire obtenue à l'issue de l'injection, il reste encore un certain nombre d'opérations à réaliser pour obtenir la pièce finale.

Parmi ces différentes opérations, on réalise l'usinage précis notamment des contours du bord d'attaque, du bord de fuite et du pied. En effet, ces zones doivent répondre à des côtes de construction très précises. Ainsi, dans le cas du pied de l'aube, une attention particulière est requise pour ses portées, à savoir les surfaces soumises à d'importantes contraintes pendant la rotation du fait de leur contact avec le flanc de l'alvéole du disque qui reçoit ce pied. En particulier, de l'usure de contact ou "fretting" intervient entre ces surfaces en contact comme conséquence du frottement répétitif d'une pièce sur une autre, les forces de friction résultantes engendrant un endommagement de la matière par génération de chaleur et différents processus de fatigue.

Également, parmi ces opérations ultérieures, on met en place différentes protections pour renforcer la résistance thermomécanique de l'aube composite. Ainsi, on fixe une protection métallique sur le bord d'attaque, par exemple sous la forme d'une pièce en titane collée sur toute la surface du bord d'attaque et sur une portion avant des surfaces extérieures de la paroi d'extrados et de la paroi d'intrados. Également, on renforce la face extérieure de la paroi d'intrados par montage d'un film de protection pouvant être réalisé en matériau synthétique (par exemple du polyuréthane) et directement collé sur la pièce intermédiaire.

Quand il s'agit de réaliser toutes ces opérations pour chaque aube de la soufflante, et éventuellement pour toutes les aubes de plusieurs étages du compresseur basse pression, cela engendre un temps de réalisation relativement long et un aspect économique significatif.

De plus, en réalisant un usinage de la préforme polymérisée, les zones en question peuvent subir une diminution de la résistance mécanique par le fait que cet usinage coupe une partie des fils de la préforme tissée initiale, en particulier des fils de chaîne.

La présente invention a pour objectif de fournir un procédé permettant de surmonter les inconvénients précités et en particulier d'améliorer la conservation de l'intégrité des fibres à l'issue de l'injection, notamment pendant l'usinage ultérieur, en offrant la possibilité de réaliser lors de l'étape de moulage par injection de la préforme la pose d'éléments de protection.

En fait, la présente invention a pour but d'obtenir, en sortie de l'étape de moulage par injection une pièce qui présente une forme plus proche de celle de la pièce finale.

A cet effet, selon la présente invention, le procédé est caractérisé en ce qu'il comprend les étapes selon la revendication 1.

De cette manière, on comprend que par le fait de ne pas couper la série de fils traceurs le long de la surface de référence, c'est-à-dire plus particulièrement des fils de chaîne s'étendant globalement selon la direction longitudinale de la préforme et donc de la pièce finale, on améliore la cohésion et donc les propriétés mécaniques de cette surface de référence. Cette dernière peut notamment être constituée de la surface de la zone de la préforme destinée à devenir tout ou partie du bord d'attaque et/ou de la paroi d'intrados et/ou du pied.

En outre, en réalisant une prédéformation de la préforme découpée, on peut s'assurer de bien disposer et orienter les zones de la préforme les unes par rapport aux autres, ce qui est facilité par le fait qu'à ce moment là la préforme résultant des étapes de tissage et de découpe, est relativement souple. On peut réaliser cette déformation en plusieurs étapes, en tenant compte des différentes parties de l'aube et de leur position et orientation propre. Ensuite, on fige cette position de prédéformation dans l'étape d) qui permet cette rigidification relative par compactage du fait de la présence du produit d'ensimage recouvrant les fibres pour en faciliter le tissage, lequel produit d'ensimage peut être complété par un produit tackifiant, par exemple une résine époxyde diluée.

De cette façon, on assure qu'un maximum de fils traceurs sont bien positionnés lors de l'injection réalisée selon la technique RTM « Resin Transfer Moulding ». De cette façon, on conserve le maximum de fils indemnes par la suite, soit parce qu'aucun usinage n'est réalisé dans cette partie ou bien parce que l'usinage reste strictement parallèle à ces fils traceurs, ce qui garantit de ne pas couper un fil situé parallèlement à ce fil traceur, le long de son étendue.

Globalement, grâce au procédé selon la présente invention, il est possible de fabriquer une aube, et notamment une aube de soufflante qui présente dès sa sortie de l'étape d'injection pour différentes parties une forme et des dimensions très proches de celles de la pièce définitive.

D'autres avantages et caractéristiques de l'invention ressortiront à la lecture de la description suivante faite à titre d'exemple et en référence aux dessins annexés dans lesquels :
- la figure 1 est une vue générale en perspective d'une préforme, après découpage ; et,
- les figures 2 à 6 sont des vues en projection d'autres étapes de réalisation du procédé selon la présente invention.

Le procédé conforme à la présente invention est réalisé à partir d'une préforme telle que celle résultant d'un tissage en trois dimensions réalisé, par exemple conformément au document FR 2 861 143. Ainsi, la première étape a) du procédé consiste à réaliser une telle préforme tridimensionnelle par tissage, qui comporte des fils de chaîne et des fils de trame. Dans ces deux groupes de fils, on prévoit des fils traceurs identifiables visuellement des autres et situés régulièrement au moins à la surface de la préforme.

Avantageusement, ladite préforme est formée de fils de chaîne et de fils de trame, la direction des fils de chaîne formant la direction longitudinale de la préforme, ladite préforme comporte au moins une première partie, réalisée selon une première armure, formant la pale de l'aube, et une deuxième partie, réalisée selon une deuxième armure, formant le pied de l'aube, et la première partie et la deuxième partie sont séparées par une zone de transition dans laquelle la première armure est progressivement modifiée pour aboutir à la deuxième armure, ce par quoi on obtient une diminution au moins de l'épaisseur de l'aube entre la deuxième partie et la première partie.

Les fils de tissage appartiennent au groupe formé des fibres de carbone, des fibres de verre, des fibres de silice, des fibres de carbure de silicium, des fibres d'alumine, des fibres aramides et des fibres de polyamides aromatiques.

Cette préforme tissée d'une seule pièce est ensuite découpée conformément à l'étape b) du procédé selon l'invention. Plus exactement, cette préforme tissée est détourée par découpage du contour d'après une abaque tridimensionnelle prédéterminée prévue pour qu'après la déformation, la préforme respecte la géométrie de la pièce finie. Cette découpe peut être réalisée par jet d'eau et/ou par des moyens mécaniques (ciseaux, cutter, scie....) et/ou par découpe au laser.

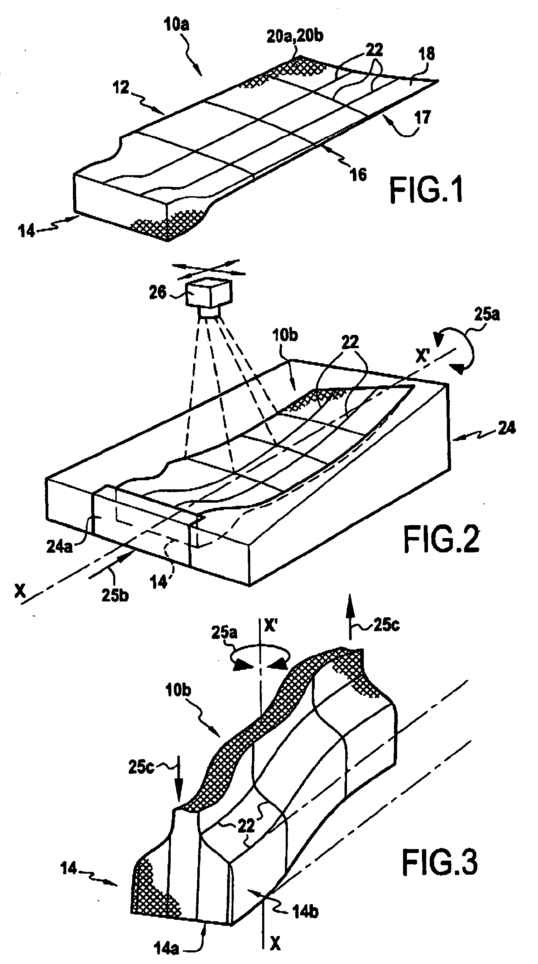

On aboutit à une préforme découpée 10a visible sur la figure 1. On retrouve les parties destinées à former la pale 12 et le pied 14 de l'aube. En particulier, les fils de chaîne et de trame 20 utilisés pour le tissage en trois dimensions sont des fibres de carbone et des fibres de verre ou en kevlar forment des fils traceurs 22 situés essentiellement à la surface de la préforme, le long de la direction principale parallèle aux fils de chaîne et le long de la direction transversale parallèle aux fils de trame. De cette façon, les fils traceurs 22 apparaissent de couleur blanche sur le reste de la préforme qui est noire, et les fils traceurs 22 sont donc très visibles. En plus, ces fils traceurs sont détectables par les technologies classiques de contrôle non destructif (type tomographie par rayons X ou par ultrasons) permettant de vérifier la conformité de la pièce finale.

En particulier, ces fils traceurs 22 sont présents ici en surface des deux faces (paroi d'intrados 17 et paroi d'extrados 18) de l'aube à des emplacements prédéterminés afin de servir de point de référence pour le positionnement en vue de la découpe et d'autres étapes de traitement de la préforme comme il sera exposé ci-après.

Conformément à la présente invention, lors de cette étape de découpe, il est prévu de conserver une série de fils traceurs situés à la surface de la préforme le long d'au moins une face de référence 16, qui dans le cas illustrée est la face destinée à former le bord d'attaque.

Ensuite, conformément la présente invention, on réalise une étape c) dans laquelle on réalise une prédéformation de la préforme découpée 10a.

Plus précisément, pendant l'étape c) on réalise ladite prédéformation en plaçant la préforme découpée 10a dans un moule de conformation 24 présentant différentes parties délimitant entre elles une cavité destinée à loger la préforme découpée 10a et présentant des marques servant de référence pour le positionnement d'au moins certains des fils traceurs 22.

Différents systèmes de repérage et de positionnement de la préforme découpée 10a peuvent être utilisés, en particulier un projecteur laser 26 qui projette un faisceau lumineux à l'emplacement idéal d'un fil traceur 22 de sorte qu'il est alors aisé de déplacer en conséquence le fil traceur 22 correspondant pour obtenir le positionnement prédéterminé.

Alternativement ou en supplément, des masques, reprenant le contour et/ou la position de tout ou partie des fils traceurs 22, peuvent être disposés sur la préforme afin de contrôler son bon positionnement.

On peut concevoir que la mise en place de la préforme découpée 10a dans le moule de conformation 24 soit suffisante pour réaliser l'ensemble des déformations nécessaires pour aboutir à la forme souhaitée finale. Cependant, on peut également, avantageusement, réaliser cette étape c) en plusieurs sous étapes.

Notamment, pendant l'étape c), avant de placer la préforme découpée 10a dans le moule de conformation 24, on effectue une prédéformation préliminaire consistant, par exemple, à réaliser un cisaillement selon une direction parallèle à la direction principale longitudinale de la préforme découpée, en maintenant la préforme découpée 10a dans son plan.

Ensuite, on dispose la préforme découpée 10b ayant subi ce mouvement de cisaillement dans le moule de conformation 24 qui place la préforme découpée dans une nouvelle configuration qui la déforme davantage en lui appliquant en outre une rotation (flèche 25a) autour d'un axe XX' parallèle à sa direction principale.

On peut aussi prévoir que le moule de conformation 24 présente une partie mobile 24a, coulissante et destinée à venir se positionner contre l'extrémité libre du pied 14 de la préforme afin de venir exercer une contrainte (flèche 25b) réalisant la déformation souhaitée de cette portion 14 de la préforme, ou évitant certains types de déformation dans cette partie tandis qu'on exerce une déformation sur d'autres portions de la préforme 10b.

Il faut comprendre que de nombreuses possibilités différentes sont envisageables pour conformer la préforme découpée 10a grâce à l'utilisation des fils traceurs 22 comme éléments de référence pour positionner la préforme 10a dans le moule de conformation 24.

La stratégie de placement de la préforme découpée 10a dans le moule de conformation 24 est également liée au profil de découpe ou de détourage réalisé auparavant, selon la ou les surface(s) de référence choisie(s), en particulier parmi le pied, la tête, le bord d'attaque 16, le bord de fuite ou toute autre zone prédéterminée.

Dans ce cas, en séparant en plusieurs sous étapes la déformation que l'on veut appliquer à la préforme découpée 10a, en séparant, comme dans l'exemple exposé précédemment le cisaillement de la rotation, il est plus facile de maîtriser le positionnement très précis de toutes les portions de cette préforme, surtout lorsqu'elle présente une grande taille.

Ainsi, sur la figure 3, le pied 14 de la préforme prédéformée 10b présente une face d'extrémité libre 14a inférieure qui n'est plus plane, du fait de la résultante de la déformation réalisée par cisaillement et rotation, et des faces latérales 14b dont le contour est visible au moyen des fils traceurs 22 qui ne sont pas dirigés selon une direction rectiligne (traits mixtes), mais selon un contour courbe résultant du cisaillement (flèches 25c) et de la rotation (flèche 25a) réalisés au cours de cette étape c) de prédéformation.

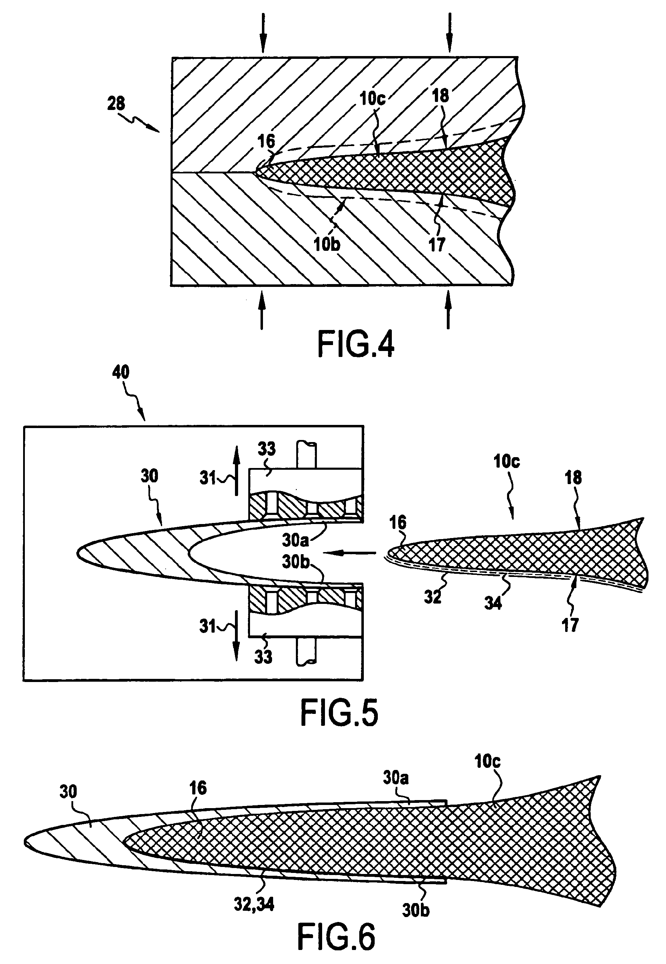

Ensuite, conformément à l'étape d), on réalise un compactage qui rigidifie la préforme prédéformée 10b. Le moule de compactage 28 utilisé à cet effet, visible partiellement sur la figure 4, peut être réalisé avantageusement en complétant le moule de conformation 24 par les équipements nécessaires. En effet, le moule de compactage 28 doit pouvoir être porté à une température de l'ordre de 100 °C, en réalisant une mise sous vide partielle pour l'aspiration du solvant qui s'évapore.

Au cours de cette étape, ce sont les produits d'ensimage enrobant les fils et qui sont utilisés pour faciliter le tissage, qui vont permettre cette rigidification. En fait, cette rigidification va figer de façon suffisante la conformation donnée à la préforme découpée 10a pour qu'on puisse la placer aisément dans le moule d'injection sans modifier sensiblement sa forme.

Si nécessaire, on peut ajouter un tackifiant à l'intérieur de la préforme, par exemple une résine diluée, notamment de type époxyde, le tout étant de pouvoir, sous l'effet de la chaleur et de la pression qui s'exercent pendant l'étape de compactage d), de coller entre elles les fibres de carbone tissées pour éviter que la préforme prédéformée 10b ne subisse une quelconque déformation ultérieure, notamment pendant l'étape d'injection.

Le moule de compactage 28 présente un logement dont les dimensions et le volume permettent de compacter la préforme tissée à un taux volumique de fibres de l'ordre de 55 à 58 % correspondant sensiblement au taux volumique définitif de la pièce finale. Dans l'exemple de réalisation représenté, le moule de compactage 28 classique est modifié à l'emplacement destiné à recevoir la face de référence 16 de la préforme qui va former le bord d'attaque.

À cet endroit, les dimensions du moule de compactage 28 sont modifiées de sorte qu'on réalise un compactage supplémentaire aboutissant à un taux volumique de fibres de l'ordre de 65 %. Alternativement, ce surcompactage peut être obtenu après le compactage et la rigidification réalisés dans un moule de compactage 28 non modifié, en utilisant un outil spécifique venant réaliser ce compactage supplémentaire uniquement dans la zone de la préforme prédéformée 10b destinée à former le bord d'attaque.

Dans l'exemple de réalisation illustrée sur la figure 5, on réalise, avant l'étape d'injection, et après l'étape de surcompactage exposée précédemment, la pose de plusieurs éléments de protection sur la préforme compactée 10c.

À cet effet, en premier lieu, on fixe (par collage) un élément de protection 30 du bord d'attaque métallique, par exemple en titane sur la face de référence 16 surcompactée.

Cet élément de protection 30 forme un demi manchon longitudinal qui vient se chausser sur la zone sur-compactée de la préforme 10c, et qui présente une épaisseur plus importante dans la zone formant la pointe du bord d'attaque 16, de part et d'autres de portions formant des ailes 30a, 30b.

Il ressort des explications qui précèdent, que pendant l'étape d) on réalise, avant, pendant ou après la rigidification, les sous-étapes suivantes :
d1) on réalise un sur-compactage de la préforme prédéformée 10c à l'emplacement du bord d'attaque ;
d2) on monte sur la préforme prédéformée 10c, à l'emplacement du bord d'attaque, un élément de protection 30 du bord d'attaque, métallique, présentant deux ailes destinées à venir recouvrir une portion des parois d'intrados et d'extrados.

Plus précisément, afin de faciliter la pose de cet élément de protection 30, pendant l'étape d2) on dispose ledit élément de protection 30 dans un dispositif de montage 40 apte à écarter lesdites ailes 30a, 30b (flèches 31) dudit élément de protection 30, puis on place ledit dispositif de montage 40 sur la préforme prédéformée 10c de sorte que les deux ailes 30a, 30b dudit élément de protection 30 chaussent le bord d'attaque surcompacté de la préforme prédéformée 10c, et on relâche lesdites ailes 30a, 30b.

Il faut noter qu'au préalable, on a disposé de la colle sur la surface concernée du bord d'attaque surcompacté 16 de la préforme prédéformée 10c.

Ce dispositif de montage 40 se présente sous la forme d'un moule formant un dispositif écarteur qui écarte les ailes de l'élément de protection, et ceci afin de faciliter l'insertion de la préforme 10c à l'intérieur du logement délimité par l'élément de protection longitudinal 30.

À cet effet, le dispositif de montage 40 est susceptible d'être mis partiellement sous vide, par un système de mise sous vide partiel 33, de sorte que lorsque l'élément de protection 30 métallique est disposé à l'intérieur du logement de ce dispositif de montage 40, la dépression permet d'écarter les ailes 30a, 30b de l'élément de protection (voir les flèches 31), ce qui permet alors de disposer aisément la préforme 10c, ou plus précisément la portion 16 de cette préforme destinée à former le bord d'attaque, à l'intérieur de l'élément de protection 30, entre les ailes 30a, 30b (voir la figure 6).

De plus, selon l'exemple de réalisation, avant l'étape d2), on fixe un film de protection 32 sur la préforme prédéformée, sur une portion de la surface extérieure de la paroi d'intrados comprenant le bord d'attaque. Ce film de protection 32, par exemple réalisé en polyuréthane, est de préférence collé, et va servir de protection anti-érosion de la paroi d'intrados qui est soumise au flux d'air venant à l'intérieur de la soufflante.

Un tel film de protection 32 permet avantageusement de renforcer également les propriétés mécaniques de surface de la paroi d'intrados 17 qui est la partie de l'aube soumise en premier lieu au flux d'air entrant.

Il faut alors utiliser, sous le film de protection 32, une colle, par exemple de type polyuréthanne, qui soit peu visqueuse et résiste aux températures d'injection et de cuisson (respectivement de l'ordre de 160 et 180°C).

Comme il apparaît sur la figure 5, dans l'exemple de réalisation, on interpose entre le film de protection 32 et la préforme prédéformée 10c, un élément d'interface 34 formant, sous le film de protection 32, une surépaisseur sur les fils 20 de la préforme qui se trouvent à la surface de la préforme.

En effet, par cet élément d'interface 34, on cherche à éviter, ou tout au moins à minimiser, le fait que le film de protection 32 soit déformé par l'état de surface de la préforme qui est tributaire de la position et du diamètre des fils de tissage 20.

A cet effet, on peut utiliser, à titre d'élément d'interface 34, situé entre les fils tissés 20 et le film de protection 32, un élément d'interface 34 souple, tel qu'un tissu sec, pré-imprégné ou un non tissé, de préférence réalisé à partir de fibres de carbone, ou bien une coquille plus rigide réalisée à partir de résine seule, ou d'un mélange de résine et de fibres.

À l'issue de toutes ces étapes, on obtient une préforme rigide (non représentée) présentant une conformation définitive, équipée de différentes protections, à savoir de l'élément de protection métallique 30 du bord d'attaque et du film de protection 32 de la paroi d'intrados 17, sous lequel est disposé un élément d'interface 34.

Également, on prévoit que pendant l'étape e) de préparation du moule d'injection, on dispose en outre dans ledit moule d'injection au moins une cale (non représentée) contre la surface de la préforme rigidifiée destinée à former le dessous du pied de l'aube.

Dans ce cas, pendant les étapes f) et g) au cours desquelles le moulage par injection est réalisé, ladite cale est maintenue sous pression constante contre la surface de la préforme rigidifiée destinée à former le dessous du pied de l'aube, notamment la surface 14a formant la surface d'extrémité libre du pied (voir figure 3). Par exemple, comme on le voit sur la figure 2, on utilise une cale formée d'une pièce similaire à la partie mobile 24a du moule de conformation 24, apte à coulisser selon une direction parallèle à la direction principale longitudinale de l'aube.

De cette façon, on peut appliquer la pression de compaction adéquate sur cette cale pour garantir un bon moulage des portées du pied 14.

On comprend que l'utilisation de cette cale sous pression remplace la technique utilisée jusqu'alors et consistant à placer huit à quinze feuilles de pré-imprégné sous le pied pour former une surépaisseur à la base du pied pendant le moulage, mais qui s'accompagnait souvent de la nécessité d'une rectification des dimensions par usinage, et surtout réalisait l'addition d'un insert non cohésif par ses fibres/fils tout au moins, avec le reste de la préforme, d'où des risques de délaminage aptes à former des zones de faiblesse mécanique en fonctionnement.

La dernière étape consiste en l'étape classique de moulage par injection de résine à l'intérieur du moule d'injection qui comporte dans ce cas particulier la préforme prédéformée 10c équipée des protections.

À ce moment là, il faut comprendre que pendant l'étape f) au cours de laquelle le moule est chauffé, la zone 16 surcompactée et rigidifiée au cours des étapes d) et d1), à savoir le bord d'attaque surcompacté de la préforme prédéformée 10c, se ramollit. En effet, il se produit un défoisonnement, à savoir un relâchement de la structure tissée qui reprend ainsi la place qui lui est allouée par le moule d'injection, ce qui assure ainsi un contact intime entre le bord d'attaque, la colle et les protections, en particulier entre le bord d'attaque et le logement de l'élément de protection 30.

On peut prévoir que le moule d'injection est pourvu d'autres cales, notamment des cales situées au bord du logement recevant la préforme, et que l'on retire en premier après l'injection, au cours du refroidissement, pour éviter d'induire des contraintes et de fragiliser l'aube, en particulier dans certaines zones, du fait des différences de coefficients de dilatation thermique des matériaux composant le moule, souvent métallique, et la résine injectée.

De cette façon, on comprend que le procédé conforme à la présente invention permet d'obtenir, à la sortie du moule d'injection, une aube qui est déjà équipée des protections du bord d'attaque, et de la paroi d'intrados et qui présente un pied dont les portées présentent les côtes de fabrication définitives.

## Revendications

1. Procédé de fabrication d'une aube de turbomachine composite, **caractérisé en ce qu'**il comprend les étapes suivantes :
a) on réalise une préforme par tissage en trois dimensions de fils de chaîne (20a) et de fils de trame (20b) enrobés de produits d'ensimage, ladite préforme comprenant à la fois la pale (12) et le pied (14) de l'aube, les fils de chaîne (20a) et les fils de trame (20b) comprenant des fils traceurs (22) identifiables visuellement disposés au moins à la surface de la préforme ;
b) on découpe ladite préforme en laissant intacts plusieurs de fils traceurs (22) situés le long d'une face de référence (16) de la préforme, ce par quoi on fournit une préforme découpée (10a) apte à prendre la forme et les dimensions des parties constitutives de l'aube ;
c) on prédéforme ladite préforme découpée (10a) par le fait qu'on effectue une prédéformation préliminaire consistant à réaliser un cisaillement selon une direction parallèle à la direction principale de la préforme découpée (10a), en maintenant la préforme découpée (10a) dans son plan et par le fait que l'on dispose ensuite la préforme découpée (10a) ayant subi ce mouvement de cisaillement dans un moule de conformation (24) qui place la préforme découpée (10a) dans une configuration qui la déforme en rotation autour d'un axe parallèle à sa direction principale, ce par quoi on fournit une préforme prédéformée (10b);
d) on réalise un compactage qui rigidifie ladite préforme prédéformée (10b) grâce aux produits d'ensimage, ce par quoi on fournit une préforme rigidifiée (10c);
e) on fournit un moule d'injection dans lequel on place ladite préforme rigidifiée (10c) ;
f) on injecte dans ledit moule d'injection un liant comprenant une résine thermodurcissable afin d'imprégner toute la préforme prédéformée rigidifiée (10c) et de maintenir la disposition relative entre les fils (20) de la préforme;
g) on chauffe ledit moule d'injection ; et
h) on sort du moule une pièce moulée composite présentant sensiblement la forme et les dimensions de ladite aube.

2. Procédé selon la revendication 1, **caractérisé en ce que** les fils traceurs (22) sont de nature différente des autres fibres (20).

3. Procédé selon la revendication 1, **caractérisé en ce que** pendant l'étape d) on réalise, avant pendant ou après la rigidification, les sous-étapes suivantes :
d1) on réalise un sur-compactage de la préforme prédéformée (10b) à l'emplacement du bord d'attaque ;
d2) on monte sur la préforme prédéformée, à l'emplacement du bord d'attaque, un élément de protection (30) du bord d'attaque, métallique, présentant deux ailes (30a, 30b) destinées à venir recouvrir une portion des parois d'intrados et d'extrados.

4. Procédé selon la revendication 3, **caractérisé en ce que** pendant l'étape d2) on dispose ledit élément de protection (30) dans un dispositif de montage (40) apte à écarter lesdites ailes (30a, 30b) dudit élément de protection (30), puis on place ledit dispositif de montage (40) sur la préforme prédéformée (10b) de sorte que les deux ailes dudit élément de protection chaussent le bord d'attaque surcompacté de la préforme prédéformée, et on relâche lesdites ailes.

5. Procédé selon la revendication 3 ou 4, **caractérisé en ce qu'**avant l'étape d2), on fixe un film de protection (32) sur la préforme prédéformée (10b), sur une portion de la surface extérieure de la paroi d'intrados comprenant le bord d'attaque.

6. Procédé selon la revendication 5, **caractérisé en ce que** le film de protection (32) est en polyuréthanne.

7. Procédé selon la revendication 5 ou 6, **caractérisé en ce que** l'on interpose entre le film de protection (32) et la préforme prédéformée (10b), un élément d'interface (34) formant une surépaisseur sur les fils (20) de la préforme.

8. Procédé selon l'une quelconque des revendications 1 à 7, **caractérisé en ce que** pendant l'étape e) on dispose en outre dans ledit moule d'injection au moins une cale (24a) contre la surface de la préforme rigidifiée destinée à former le dessous du pied de l'aube.

9. Procédé selon la revendication 8, **caractérisé en ce que** pendant les étapes f) et g), ladite cale (24a) est maintenue sous pression constante contre la surface (14a) de la préforme rigidifiée destinée à former le dessous du pied de l'aube.

10. Aube de soufflante obtenue selon le procédé de l'une quelconque des revendications précédentes, **caractérisée en ce que** ladite préforme comprenant à la fois la pale (12) et le pied (14) de l'aube est formée de fils de chaîne (20a) et de fils de trame (20b) tissés en trois dimensions la direction des fils de chaîne (20a) formant la direction longitudinale de la préforme, **en ce que** les fils de chaîne (20a) et de trame (20b) comprennent des fils traceurs (22) identifiables visuellement disposés au moins à la surface de la préforme et **en ce que** plusieurs fils traceurs (22) situés le long d'une face de référence (16) de la préforme ne sont pas coupés afin de permettre la vérification de la conformité de l'aube par des technologies de contrôle non destructif.

11. Aube selon la revendication 10, **caractérisée en ce que** ladite préforme est formée de files de chaîne (20a) et de fils de trame (20b), la direction des fils de chaîne (20a) formant la direction longitudinale de la préforme, **en ce que** ladite préforme comporte au moins une première partie, réalisée selon une première armure, formant la pale (12) de l'aube, et une deuxième partie, réalisée selon une deuxième armure, formant le pied (14) de l'aube, et **en ce que** la première partie et la deuxième partie sont séparées par une zone de transition dans laquelle la première armure est progressivement modifiée pour aboutir à la deuxième armure, ce par quoi on obtient une diminution au moins de l'épaisseur de l'aube entre la deuxième partie et la première partie.

12. Aube selon la revendication 114, **caractérisée en ce que** les fils appartiennent au groupe formé des fibres de carbone, des fibres de verre, des fibres de silice, des fibres de carbure de silicium, des fibres d'alumine, des fibres aramides et des fibres de polyamides aromatiques.

13. Aube selon la revendication 12, **caractérisée en ce que** les fils de chaîne (20a) et les fils de trame (20b) sont des fibres de carbone et **en ce que** les fils traceurs (22) sont des fibres de verre.

## Claims

1. A method of manufacturing a composite turbomachine blade, the method being **characterized in that** it comprises the following steps:
a) making a preform by three-dimensional weaving of warp yarns (20a) and weft yarns (20b) covered with oiling agents, said preform comprising both the airfoil (12) and the root (14) of the blade, the warp yarns (20a) and weft yarns (20b) including tracer yarns (22) that are visually identifiable and that are disposed at least on the surface of the preform;
b) cutting out said preform while leaving intact several tracer yarns (22) situated along a reference face (16) of the preform, thereby providing a cut-out preform (10a) suitable for taking the shape and the dimensions of portions constituting the blade;
c) pre-deforming said cut-out preform (10a) by the fact that a preliminary pre-deformation is performed that consists in applying shear in a direction parallel to the main direction of the cut-out preform (10a), while holding the cut-out preform (10a) in its plane and by the fact that the cut-out preform (l0a) that has been subject to this shear movement is thereafter placed in a shaping mold (24) which puts the cut-out preform (10a) into a configuration deforming it by rotation about an axis XX' parallel to its main direction, so as to provide a pre-deformed preform (10b) ;
d) compacting that stiffens said pre-deformed preform (10b) due to oiling agents, so as to provide a stiffened preform (10c) ;
e) providing an injection mold in which said stiffened preform (10c) is placed;
f) injecting into said injection mold a binder comprising a thermosettable resin so as to impregnate the entire stiffened pre-deformed preform (10c) and maintain the relative disposition between the yarns (20) of the preform;
g) heating said injection mold; and
h) extracting from the mold a composite molded part presenting substantially the shape and the dimensions of said blade.

2. A method according to claim 1, **characterized in that** the tracer yarns (22) are of different nature from that of the other yarns (20).

3. A method according to claim 1, **characterized in that**, during step d), before or after stiffening, the following sub-steps are performed:
d1) supercompacting the pre-deformed preform (10b) at the location of the leading edge; and
d2) mounting a metal, leading edge protector element (30) on the pre-deformed preform at the location of the leading edge, the protector element presenting two flanges (30a, 30b) for receiving a portion of the pressure-side and suction-side walls.

4. A method according to claim 3, **characterized in that**, during step d2), said protector element (30) is placed in a mounting device (40) suitable for splaying apart said flanges (30a, 30b) of said protector element (30), and then said mounting device (40) is placed on the pre-deformed preform (10b) in such a manner that the two flanges of said protector element are fitted onto the supercompacted leading edge of the pre-deformed preform, and then said flanges are released.

5. A method according to claim 3 or claim 4, **characterized in that**, prior to step d2), a protective film (32) is secured on the pre-deformed preform (10b) over a portion of the outside surface of the pressure-side wall that includes the leading edge.

6. A method according to claim 5, **characterized in that** the protective film (32) is made of polyurethane.

7. A method according to claim 5 or claim 6, **characterized in that** an interface element (34) is interposed between the protective film (32) and the pre-deformed preform (10b), the interface element (34) forming extra thickness on the yarns (20) of the preform.

8. A method according to any one of claims 1 to 7, **characterized in that**, during step e), at least one spacer (24a) is also placed in said injection mold against the surface of the stiffened preform that is to form the bottom of the blade root.

9. A method according to claim 8, **characterized in that**, during steps f) and g), said spacer (24a) is maintained under constant pressure against the surface (14a) of the stiffened preform that is to form the bottom of the blade root.

10. A fan blade obtained by the method of any preceding claim, **characterized in that** said preform comprising both the airfoil (12) and the root (14) of the blade is formed by three-dimensional weaving of warp yarns (20a) and weft yarns (20b), the direction of the warp yarns (20a) forming the longitudinal direction of the preform, **in that** the warp and weft yarns (20a, 20b) include tracer yarns (22) that are visually identifiable and that are disposed at least on the surface of the preform and that several tracer yarns (22) situated along a reference face (16) of the preform are not cut so as to verify the compliance of the blade by non-destructive inspection technologies.

11. A blade according to claim 10, **characterized in that** said preform is made up of warp yarns (20a) and weft yarns (20b), the direction of the warp yarns (20a) forming the longitudinal direction of the preform, **in that** said preform comprises at least a first portion made with a first weave forming the airfoil (12) of the blade, and a second portion made with a second weave forming the root (14) of the blade, and **in that** the first and second portions are united by a transition zone in which the first weave is modified progressively to become the second weave, thereby obtaining a reduction at least in the thickness of the blade between the second portion and the first portion.

12. A blade according to claim 11, **characterized in that** the yarns belong to the group constituted by: carbon fibers; glass fibers; silica fibers; silicon carbide fibers; alumina fibers; aramid fibers; and aromatic polyamide fibers.

13. A blade according to claim 12, **characterized in that** the warp yarns (20a) and the weft yarns (20b) are carbon fibers, and **in that** the tracer yarns (22) are glass fibers.

## Patentansprüche

1. Verfahren zur Herstellung einer Turbomaschinenschaufel aus Verbundwerkstoff, **dadurch gekennzeichnet, daß** es die folgenden Schritte umfaßt:
a) Herstellen eines Vorformlings durch dreidimensionales Weben von Kettfäden (20a) und von Schußfäden (20b), die mit Schlichtemitteln ummantelt sind, wobei der Vorformling sowohl das Blatt (12) als auch den Fuß (14) der Schaufel umfaßt, wobei die Kettfäden (20a) und die Schußfäden (20b) visuell erkennbare Tracerfäden (22) umfassen, die wenigstens an der Oberfläche des Vorformlings angeordnet sind,
b) Zuschneiden des Vorformlings, wobei mehrere entlang einer Bezugsfläche (16) des Vorformlings gelegene Tracerfäden (22) unversehrt gelassen werden, wodurch ein zugeschnittener Vorformling (10a) bereitgestellt wird, der geeignet ist, die Form und die Abmessungen der Bestandteile der Schaufel anzunehmen,
c) Vorverformen des zugeschnittenen Vorformlings (10a) **dadurch**, daß eine vorbereitende Vorverformung durchgeführt wird, die darin besteht, eine Scherung entlang einer zur Hauptrichtung des zugeschnittenen Vorformlings (10a) parallelen Richtung, unter Halten des zugeschnittenen Vorformlings (10a) in seiner Ebene, zu vollziehen, und daß anschließend der zugeschnittene Vorformling (10a), der dieser Scherbewegung unterzogen wurde, in einer Form zur Formgebung (24) angeordnet wird, die den zugeschnittenen Vorformling (10a) in eine Gestalt bringt, die ihn um eine zu seiner Hauptrichtung parallel verlaufende Achse drehverformt, wodurch ein vorverformter Vorformling (10b) bereitgestellt wird,
d) Durchführen eines Verdichtens, das den vorverformten Vorformling (10b) mittels der Schlichtemittel versteift, wodurch ein versteifter Vorformling (10c) bereitgestellt wird,
e) Bereitstellen einer Spritzform, in welcher der versteifte Vorformling (10c) angeordnet wird,
f) Einspritzen eines einen Duroplast umfassenden Bindemittels in die Spritzform, um den gesamten vorverformten, versteiften Vorformling (10c) zu imprägnieren und um die Relativanordnung zwischen den Fäden (20) des Vorformlings aufrechtzuerhalten,
g) Erhitzen der Spritzform und
h) Herausnehmen aus der Form eines Verbundformteils, das im wesentlichen die Form und die Abmessungen der Schaufel aufweist.

2. Verfahren nach Anspruch 1, **dadurch gekennzeichnet, daß** die Tracerfäden (22) von einer anderen Art als die anderen Fasern (20) sind.

3. Verfahren nach Anspruch 1, **dadurch gekennzeichnet, daß** während des Schrittes d) - vor dem, während des oder nach dem Versteifen(s) - die folgenden Unterschritte durchgeführt werden:
d1) Durchführen eines Überverdichtens des vorverformten Vorformlings (10b) an der Stelle der Vorderkante,
d2) Anbringen an dem vorverformten Vorformling, an der Stelle der Vorderkante, eines Metallelements zum Schutz (30) der Vorderkante, das zwei Schenkel (30a, 30b) aufweist, die dazu bestimmt sind, einen Abschnitt der vorderseitigen und der rückseitigen Wand zu bedecken.

4. Verfahren nach Anspruch 3, **dadurch gekennzeichnet, daß** während des Schrittes d2) das Schutzelement (30) in einer Montagevorrichtung (40) angeordnet wird, die geeignet ist, die Schenkel (30a, 30b) des Schutzelements (30) zu spreizen, anschließend die Montagevorrichtung (40) an dem vorverformten Vorformling (10b) angeordnet wird, so daß die beiden Schenkel des Schutzelements über die überverdichtete Vorderkante des vorverformten Vorformlings gezogen sind, und die Schenkel entspannt werden.

5. Verfahren nach Anspruch 3 oder 4, **dadurch gekennzeichnet, daß** vor dem Schritt d2) ein Schutzfilm (32) an dem vorverformten Vorformling (10b) über einen Abschnitt der Außenseite der vorderseitigen Wand, der die Vorderkante umfaßt, befestigt wird.

6. Verfahren nach Anspruch 5, **dadurch gekennzeichnet, daß** der Schutzfilm (32) aus Polyurethan besteht.

7. Verfahren nach Anspruch 5 oder 6, **dadurch gekennzeichnet, daß** zwischen dem Schutzfilm (32) und dem vorverformten Vorformling (10b) ein Grenzflächenelement (34), das auf den Fäden (20) des Vorformlings eine Überdicke bildet, angeordnet wird.

8. Verfahren nach einem der Ansprüche 1 bis 7, **dadurch gekennzeichnet, daß** während des Schrittes e) ferner in der Spritzform wenigstens ein Keil (24a) an der Fläche des versteiften Vorformlings angeordnet wird, die dazu bestimmt ist, die Unterseite des Fußes der Schaufel zu bilden.

9. Verfahren nach Anspruch 8, **dadurch gekennzeichnet, daß** während der Schritte f) und g) der Keil (24a) unter konstantem Druck an der Fläche (14a) des versteiften Vorformlings gehalten wird, die dazu bestimmt ist, die Unterseite des Fußes der Schaufel zu bilden.

10. Gebläseschaufel, die nach dem Verfahren von einem der vorhergehenden Ansprüche erhalten wird, **dadurch gekennzeichnet, daß** der Vorformling, der sowohl das Blatt (12) als auch den Fuß (14) der Schaufel umfaßt, aus dreidimensional gewebten Kettfäden (20a) und Schußfäden (20b) gebildet ist, wobei die Richtung der Kettfäden (20a) die Längsrichtung des Vorformlings bildet, daß die Kettfäden (20a) und Schußfäden (20b) visuell erkennbare Tracerfäden (22) umfassen, die wenigstens an der Oberfläche des Vorformlings angeordnet sind, und daß mehrere entlang einer Bezugsfläche (16) des Vorformlings gelegene Tracerfäden (22) nicht zerschnitten werden, um die Überprüfung der Konformität der Schaufel durch zerstörungsfreie Prüftechnologien zu ermöglichen.

11. Schaufel nach Anspruch 10, **dadurch gekennzeichnet, daß** der Vorformling aus Kettfäden (20a) und aus Schußfäden (20b) gebildet ist, wobei die Richtung der Kettfäden (20a) die Längsrichtung des Vorformlings bildet, daß der Vorformling wenigstens einen in einer ersten Bindung hergestellten ersten Teil, der das Blatt (12) der Schaufel bildet, sowie einen in einer zweiten Bindung hergestellten zweiten Teil, der den Fuß (14) der Schaufel bildet, umfaßt, und daß der erste Teil und der zweite Teil durch einen Übergangsbereich getrennt sind, indem die erste Bindung schrittweise verändert ist, um zu der zweiten Bindung zu kommen, wodurch eine Verringerung wenigstens der Dicke der Schaufel zwischen dem zweiten Teil und dem ersten Teil erreicht wird.

12. Schaufel nach Anspruch 11, **dadurch gekennzeichnet, daß** die Fäden zu der Gruppe bestehend aus Kohlenstoffasern, Glasfasern, Silicafasern, Siliciumcarbidfasern, Aluminiumoxidfasern, Aramidfasern und Fasern aus aromatischen Polyamiden gehören.

13. Schaufel nach Anspruch 12, **dadurch gekennzeichnet, daß** die Kettfäden (20a) und die Schußfäden (20b) Kohlenstoffasern sind und daß die Tracerfäden (22) Glasfasern sind.
